# EUROPÄISCHE PATENTSCHRIFT

(11) **EP 3 597 469 B1**
(45) Veröffentlichungstag und Bekanntmachung des Hinweises auf die Patenterteilung: **17.03.2021**
(21) Anmeldenummer: 19186443.8
(22) Anmeldetag: 16.07.2019
(51) Int. Cl.: B60L 5/04, B60L 53/14, B60L 53/30, B60L 53/36, B60L 53/37, B60M 1/36

(54) **VERFAHREN UND VORRICHTUNGEN ZUM LADEN ZUMINDEST EINES ENERGIESPEICHERS EINES SCHIENENFAHRZEUGS**
METHOD AND DEVICES FOR CHARGING AT LEAST ONE ENERGY STORAGE DEVICE OF A RAIL VEHICLE
PROCÉDÉ ET DISPOSITIFS DE CHARGE D'AU MOINS UN ACCUMULATEUR D'ÉNERGIE D'UN VÉHICULE FERROVIAIRE

(30) Priorität: 19.07.2018 DE 102018212053
(43) Veröffentlichungstag der Anmeldung: 22.01.2020
(73) Patentinhaber: Siemens Mobility GmbH, 81739 München (DE)
(72) Erfinder: Henselmeyer, Christian, 91052 Erlangen (DE); Schaefer-Enkeler, Andreas, 91341 Röttenbach (DE)

(56) Entgegenhaltungen:
- EP-B1- 2 576 277
- US-A1- 2009 301 834
- US-A1- 2018 141 452
- US-B2- 6 864 598

## Beschreibung

Die Erfindung betrifft ein Verfahren zum Steuern eines Ladens zumindest eines Energiespeichers eines Schienenfahrzeugs, eine Anordnung und strecken- bzw. fahrzeugseitige Vorrichtungen mit Mitteln zur Durchführung des Verfahrens sowie ein Schienenfahrzeug mit einer solchen fahrzeugseitigen Vorrichtung.

Elektrisch angetriebene Schienenfahrzeuge, insbesondere Triebzüge, Vorortzüge, Straßenbahnen oder Lokomotiven, werden traditionell mittels entlang des Schienennetzes angeordneter Oberleitungen oder Stromschienen mit elektrischer Energie versorgt. Um einen Betrieb solcher Schienenfahrzeuge auch in einem nicht oder nicht vollständig elektrifizierten Schienennetz, insbesondere zur Überbrückung der so genannten letzten Meile, zu ermöglichen, werden diese zunehmend mit einem elektrischen Energiespeicher, insbesondere einer Antriebsbatterie oder einer Kombination aus einer Antriebsbatterie und Hochleistungskondensatoren, ausgerüstet. Die mögliche Kapazität solcher elektrischer Energiespeicher ist aufgrund des für die Unterbringung erforderlichen Einbauraums in dem Schienenfahrzeug und der zusätzlichen Gewichtsbelastung begrenzt. Die begrenzte Kapazität führt dazu, dass ein Laden des Energiespeichers während eines normalen Fahrbetriebs des Schienenfahrzeugs erforderlich ist. Bei Schienenfahrzeugen für den Personentransport kann beispielsweise der Zeitraum eines Halts des Schienenfahrzeugs an einer Haltestelle für einen Ladevorgang genutzt werden, um eine mögliche Verlängerung der Reisezeit für die Fahrgäste aufgrund durch den Ladevorgang bedingter zusätzlicher Verzögerungen zu vermeiden. Hierfür kann eine geeignete Ladeinfrastruktur, insbesondere eine Ladevorrichtung zum Laden des Energiespeichers des Schienenfahrzeugs im Bereich der Haltestelle angeordnet werden.

Aus der EP 2 576 277 B1 ist beispielsweise das Aufladen eines Energiespeichers eines Fahrzeugs, insbesondere eines Schienenfahrzeugs, mittels einer Ladestation bekannt. Durch Einsatz von Positionserkennungsmitteln wird die örtliche Position des Fahrzeugs erfasst und dadurch insbesondere ein Einfahren in die Ladestation und ein nachfolgendes Verlassen der Ladestation festgestellt. Abhängig von dieser Feststellung wird eine elektrische Verbindung zwischen einem Stromabnehmer des Fahrzeugs und einer von einer Energiequelle gespeisten Oberleitung oder Stromschiene hergestellt und wieder getrennt. Zur Vermeidung hoher Ströme und Spannungen sowie insbesondere der Ausbildung eines Lichtbogens beim Herstellen und Trennen der elektrischen Verbindung zwischen dem Stromabnehmer des Fahrzeugs und der Oberleitung bzw. Stromschiene werden vor dem Herstellen der Verbindung die Spannungen des Energiespeichers und der Energiequelle derart einander angenähert, dass ein Stromfluss reduziert wird, sowie vor dem Trennen der Verbindung der Stromfluss zwischen dem Energiespeicher und der Energiequelle derart beeinflusst, dass beim Trennen kein oder nur ein geringer Strom fließt. Ferner kann ein Schalter vorgesehen werden, welcher die Energiequelle der Ladestation abhängig von der Position des Fahrzeugs ein- und ausschaltet, wobei die Position von einem ortsfesten Sensor erfasst wird.

Aus der EP2576277 ist beispielsweise bekannt, dass eine Spannungsdifferenz zwischen Energiequelle und Fahrzeug über einer Diode abfällt. Die Diode verhindert einen Stromfluss von dem Energiespeicher in Richtung Energiequelle.

Aufgabe der vorliegenden Erfindung ist es, ein gegenüber den bekannten Verfahren aufwandsgünstigeres Laden eines Energiespeichers in einem Schienenfahrzeug zu ermöglichen. Diese Aufgabe wird durch das Verfahren, die Anordnung, Vorrichtungen sowie das Schienenfahrzeug gemäß den Merkmalen der unabhängigen Patentansprüche gelöst. Weiterbildung sind in jeweiligen abhängigen Patentansprüchen beschrieben.

Gemäß einem ersten Aspekt der Erfindung wird ein Verfahren zum Steuern eines Vorgangs zum Laden zumindest eines Energiespeichers eines Schienenfahrzeugs vorgeschlagen. Der Energiespeicher dient dabei einer Versorgung eines Antriebs des Schienenfahrzeugs mit elektrischer Energie und das Laden des Energiespeichers erfolgt mittels eines in einem begrenzten Bereich eines Streckenabschnitts eines Schienennetzes angeordneten elektrischen Leiters. Weiterhin ist von einer streckenseitigen Ladevorrichtung eine Ladespannung an den Leiter anlegbar, ansonsten wird eine Kleinspannung an den Leiter angelegt. Für ein Beginnen des Ladevorgangs wird zumindest ein mit der fahrzeugseitigen Ladevorrichtung verbundener Stromabnehmer mit dem elektrischen Leiter verbunden. Nach Erkennen durch die fahrzeugseitige Ladevorrichtung, dass die Kleinspannung an dem Leiter anliegt, wird eine elektrische Last auf den Stromabnehmer geschaltet. Nach Erkennen durch die streckenseitigen Ladevorrichtung, dass ein Laststroms in dem Leiter fließt, wird das Anlegen der Kleinspannung beendet und die Ladespannung an den Leiter angelegt. Schließlich wird nach Erkennen durch die fahrzeugseitige Ladevorrichtung, dass die Kleinspannung nicht mehr an dem Leiter anliegt, die elektrische Last von dem Stromabnehmer getrennt, und nach Erkennen durch die fahrzeugseitige Ladevorrichtung, dass die Ladespannung an dem Leiter anliegt, ein mit dem Energiespeicher elektrisch verbundener Laderegler der fahrzeugseitigen Ladevorrichtung mit dem Stromabnehmer elektrisch verbunden.

Das erfindungsgemäße Verfahren beruht auf einer einfachen Kommunikation zwischen der fahrzeugseitigen und der streckenseitigen Ladevorrichtung mittels Spannungen und Strömen unter Nutzung des für die Speisung des Ladestroms verwendeten streckenseitigen Leiters. Dabei wird vorteilhaft insbesondere sichergestellt, dass die üblicherweise hohe Ladespannung erst an den Leiter angelegt wird, wenn der Stromabnehmer des Schienenfahrzeugs elektrisch mit dem Leiter verbunden ist. Hierdurch werden einerseits mögliche elektrische Überschläge vermieden, andererseits ein Schutz für Personen und Tiere verwirklicht, da ein Anlegen der Ladespannung erst erfolgt, wenn sich das Schienenfahrzeug im Bereich des Leiters befindet, ansonsten eine für Personen ungefährliche Kleinspannung anliegt.

Das Schienenfahrzeug ist insbesondere als ein Triebzug für den Nah- und/oder Fernverkehr für den Personentransport ausgestaltet. Die Vorteile des erfindungsgemäßen Verfahrens bieten sich jedoch in gleicher Weise anderen Fahrzeugtypen, insbesondere Straßenbahnen, Untergrundbahnen, Lokomotiven oder andere Typen von Schienenfahrzeugen.

Der elektrische Energiespeicher des Schienenfahrzeugs ist beispielsweise als eine so genannte Traktionsbatterie ausgeführt. Eine Ausgestaltung des Energiespeichers als ein oder mehrere Superkondensatoren, insbesondere in Kombination mit Batteriezellen, ist jedoch in gleicher Weise denkbar. Die Kapazität des Energiespeichers ist dabei derart dimensioniert, dass eine Versorgung des Antriebs des Schienenfahrzeugs mit elektrischer Energie über eine bestimmte Fahrtstrecke gewährleistet ist. Der Energiespeicher speist, gegebenenfalls über einen Gleichspannungswandler als Aufwärts- oder Abwärtswandler, beispielsweise einen Zwischenkreis eines Stromrichters mit Gleichstrom. Ein aus dem Zwischenkreis gespeister Traktionswechselrichter generiert hieraus Wechselspannungen, welche entsprechend gewünschten Drehzahlen und Drehmomenten der elektrischen Antriebsmotoren definiert werden. Auch der Laderegler der fahrzeugseitigen Ladevorrichtung kann mit dem Zwischenkreis des Stromrichters verbunden sein und über diesen den Energiespeicher bzw. die Traktionsbatterie laden, wobei der Laderegler alternativ auch mit dem Energiespeicher direkt verbunden sein kann. Sofern der Laderegler elektrisch zwischen dem Zwischenkreis und dem Energiespeicher angeordnet ist, kann dieser auch die Funktion des Gleichspannungswandlers bzw. umgekehrt der Gleichspannungswandler die Funktion des Ladereglers übernehmen.

Neben dem Antrieb kann der Energiespeicher auch einer Versorgung von so genannten Hilfsbetrieben des Schienenfahrzeugs, insbesondere Klimaanlagen zur Kühlung und Beheizung von Fahrgasträumen, dienen, wobei auch diese in bekannter Weise aus dem Zwischenkreis des Stromrichters oder direkt aus dem Energiespeicher, insbesondere über einen Hilfsbetriebeumrichter, gespeist werden können. Sofern der Ladestrom in den Zwischenkreis eingespeist wird und sowohl der Laderegler als auch Hilfsbetriebe aus diesem Zwischenkreis gespeist werden, ist die Versorgung der Hilfsbetriebe während des Ladevorgangs mittels des Ladestroms möglich.

Abhängig von der Kapazität des Energiespeichers und der Länge der von dem Schienenfahrzeug zu befahrenden Strecke bzw. jeweiligen Streckenabschnitte sind streckenseitige Ladevorrichtungen sowie damit verbundene elektrische Leiter vorzusehen, die ein Laden des Energiespeicher mit einer ausreichenden Menge elektrischer Energie für eine Weiterfahrt auf einem nächsten Streckenabschnitt bzw. bis zu einer nächsten Ladevorrichtung ermöglichen. Bei Schienenfahrzeugen für den Personentransport eignen sich hierfür Haltestellen, insbesondere End- sowie Zwischenhaltestellen, an denen das Schienenfahrzeug für einen Zeitraum zum Stillstand kommt, um Fahrgästen ein Ein- und Aussteigen zu ermöglichen. Dieser Zeitraum kann zum Laden des Energiespeichers genutzt werden, wodurch eine mögliche Verlängerung der Reisezeit aufgrund eines für den Ladevorgang erforderlichen zusätzlichen Aufenthalts an speziellen Ladestellen vermieden werden kann. Abhängig von der Kapazität des Energiespeichers und dem Energieverbrauch des Schienenfahrzeug kann es dabei ausreichend sein, nur an bestimmten Haltestellen streckenseitige Ladevorrichtungen vorzusehen.

Die Länge des mit der Ladevorrichtung verbundenen Leiters entspricht beispielsweise weitgehend der Länge eines Bahnsteiges der Haltestelle, wobei der Leiter jedoch auch ein- oder beidseitig über diesen hinausreichen kann. In jedem Fall sollte die Länge des Leiters derart bemessen sein, dass der Stromabnehmer des Schienenfahrzeugs bei einen Halt an der Haltestelle eine elektrische Verbindung mit dem Leiter sicher herstellen kann, ohne dass das Schienenfahrzeug hierfür speziell entlang des Bahnsteigs positioniert werden muss.

Der elektrische Leiter kann insbesondere als eine Stromschiene, wie sie in bekannter Weise für die Speisung von Schienenfahrzeugen mit elektrischer Energie eingesetzt wird, ausgestaltet sein. Eine solche Stromschiene ist üblicherweise im Gleisbett zwischen den Schienen, auf denen sich das Schienenfahrzeug abstützt, oder seitlich neben dem Gleis, insbesondere in Bodennähe, angeordnet. Im Unterschied zu einer bekannten Oberleitung, wie sie im einleitend beschriebenen Stand der Technik für den Ladevorgang zum Einsatz kommt, birgt eine Anordnung im oder nahe des Gleisbetts die potenzielle Gefahr für Mensch und Tier durch Berührung der Stromschiene. Um dieser Gefahr vorzubeugen, wird außerhalb des Zeitraums eines Ladevorgangs erfindungsgemäß eine Kleinspannung an den elektrischen Leiter angelegt. Bei Anlegen einer so genannten Schutzkleinspannung (engl. Protective Extra Low Voltage, PELV) ist aufgrund der verwendeten niedrigen Spannung, typischerweise weniger als 25V Wechselspannung bzw. 60V Gleichspannung, zudem kein spezieller Berührungsschutz erforderlich. Sofern der elektrische Leiter seitlich der Schienen angeordnet ist, sollte dieser vorzugsweise auf der dem Einstiegsbereich für Fahrgäste abgewandten Seite des Schienenfahrzeugs angeordnet sein, um während des Ladevorgangs die potenzielle Gefahr eines Berührens des elektrischen Leiters mit der dann anliegenden Ladespannung, beispielsweise einer 400V Wechselspannung oder 600V Gleichspannung, durch Fahrgäste weiter zu verringern.

Der fahrzeugseitige Stromabnehmer kann entsprechend bekannten Stromabnehmern, wie sie für die Kontaktierung mit vorstehend genannten Stromschienen eingesetzt werden, ausgestaltet sein. Diese weisen üblicherweise einen Schleifschuh auf, welcher die Stromschiene seitlich, von oben oder unten bestreicht und damit eine elektrische Verbindung herstellt. Der elektrische Leiter sowie der Stromabnehmer können derart im Schienenbereich bzw. am Fahrzeug angeordnet sein, dass bei Einfahren des Schienenfahrzeugs in den Bereich des Streckenabschnitts, in dem der Leiter angeordnet ist, ein mechanischer und damit elektrischer Kontakt automatisch hergestellt und bei Ausfahren des Schienenfahrzeugs aus dem Bereich bzw. bei Erreichen des Endes des Leiters wieder getrennt wird. Alternativ erfolgt die Kontaktierung beispielsweise auch erst bei einem Stillstand des Fahrzeugs, wobei dies automatisch oder manuell durch den Fahrzeugführer gesteuert erfolgen kann. Eine gegebenenfalls erforderliche Bewegung der Stromabnehmers bzw. des Schleifschuhs in Richtung des Leiters bzw. von dem Leiter weg kann dabei beispielweise mittels eines bekannten elektrischen, pneumatischen oder hydraulischen Aktuators erfolgen.

Die fahrzeugseitige Ladevorrichtung weist beispielsweise einen bekannten Spannungssensor auf, mittels dem das Anliegen der Kleinspannung an dem Leiter erkannt werden kann. Nach Erkennen der Kleinspannung schaltet die fahrzeugseitige Ladevorrichtung erfindungsgemäß eine Last auf den Stromabnehmer auf. Diese Last kann beispielsweise als ein Widerstand einer bestimmten Größe mit einem vorgeschalteten Leistungshalbleiter zur Regelung des Stromflusses ausgestaltet sein. Das Aufschalten der Last bewirkt das Fließen eines bestimmten Laststroms in dem Leiter, welcher beispielsweise mittels eines bekannten Stromsensors in der streckenseitigen Ladevorrichtung erkannt bzw. detektiert werden kann. Das Erkennen bzw. die Detektion dieses fließenden Laststroms bewirkt in der streckenseitigen Ladevorrichtung, dass das Anlegen der Kleinspannnung an dem Leiter beendet wird. Dass die Kleinspannung nicht mehr an dem Leiter anliegt, wird wiederum von dem Spannungssensor der fahrzeugseitigen Ladevorrichtung erkannt und die auf den Stromabnehmer geschaltete Last getrennt bzw. abgeschaltet, um insbesondere einer möglichen Beschädigung der elektronischen Komponenten beim anschließenden Anlegen der Ladespannung vorzubeugen. Die nachfolgend an dem Leiter anliegende höhere Ladespannung wird mittels des Spannungssensors der fahrzeugseitigen Ladevorrichtung erkannt und der Stromabnehmer schließlich mit dem Laderegler, sei es direkt oder über den vorstehend beschriebenen Zwischenkreis, elektrisch verbunden, woraufhin Ladestrom fließen und der Energiespeicher des Schienenfahrzeugs geladen werden kann.

Insbesondere der erfindungsgemäße Schritt des Aufschaltens einer bestimmten Last durch die fahrzeugseitige Ladevorrichtung stellt sicher, dass ein nachfolgendes Aufschalten der Ladespannung nur erfolgt, wenn ein bestimmter Laststrom von der streckenseitigen Ladevorrichtung erkannt wird, während ein Stromfluss beispielsweise aufgrund eines Berührens des Leiters durch eine Person oder ein Tier nicht zu einem Aufschalten der Ladespannung führt.

Gemäß einer Weiterbildung des Verfahrens wird für ein Beenden des Ladevorgangs der Fluss des Ladestroms mittels des Ladereglers unter einen vorgegebenen Schwellwert verringert oder der Laderegler von dem Stromabnehmer getrennt. Nach Erkennen durch die streckenseitige Ladevorrichtung, dass ein Ladestrom unterhalb des Schwellwertes oder kein Ladestrom mehr in dem Leiter fließt, wird die Kleinspannung wieder an den Leiter angelegt.

Nach ausreichender Ladung des Energiespeichers bzw. nach Ablauf eines für das Laden vorgesehenen Zeitraums reduziert der Laderegler den fließenden Ladestrom derart, dass dieser einen vorgegebenen Schwellwert unterschreitet. Alternativ kann der Laderegler von dem Stromabnehmer getrennt werden, um den Fluss des Ladestroms vollständig zu beenden. Wenn der Laderegler direkt mit dem Stromabnehmer verbunden ist, kann eine solche Trennung durch Öffnen eines entsprechend dimensionierten Schalters, welcher auch unter Last schalten kann, erfolgen. Sofern, wie vorstehend beispielhaft beschrieben, sowohl der Laderegler als auch der Ladestrom mit dem Zwischenkreis verbunden sind, sollte entsprechend der Stromabnehmer von dem Zwischenkreis getrennt werden, um ein mögliches Fließen des Ladestroms beispielsweise in die Hilfsbetriebe zu vermeiden. Dies kann ebenfalls über einen unter Last schaltbaren und entsprechend dimensionierten Schalter erfolgen. Die Tatsache, dass nur noch ein Laststrom unterhalb des Schwellwertes oder kein Ladestrom mehr fließt, wird von der streckenseitigen Ladevorrichtung mittels des Stromsensors erkannt, woraufhin das Anlegen der Ladespannung beendet und die Kleinspannung wieder an den Leiter angelegt wird. Das Anliegen der Kleinspannung wird wiederum von der fahrzeugseitigen Ladevorrichtung mittels des Spannungssensors erkannt. Hieraus leitet die fahrzeugseitige Ladevorrichtung ab, dass eine Trennung der elektrischen Verbindung des Stromabnehmers mit dem Leiter ohne Gefahr eines Überschlags möglich ist. Der vorstehend beschriebene erfindungsgemäße Schritt des Aufschaltens einer Last wird nach Erkennen der Kleinspannung anschließend nicht nochmals durchgeführt.

Gemäß einer weiteren Weiterbildung des Verfahrens wird der Stromabnehmer bei einem Einfahren des Schienenfahrzeugs in den Bereich des Streckenabschnitts, in dem der Leiter angeordnet ist, mit dem Leiter elektrisch verbunden und/oder die elektrische Verbindung des Stromabnehmers mit dem Leiter bei einem Ausfahren des Schienenfahrzeugs aus dem Bereich des Streckenabschnitts getrennt.

Durch Nutzung auch der Zeiten, in denen sich das Schienenfahrzeug bereits bzw. noch in dem Bereich befindet, in dem der Leiter angeordnet ist, jedoch noch in Bewegung ist bzw. wieder in Bewegung setzt, kann der verfügbare Zeitraum für das Laden des Energiespeichers vorteilhaft verlängert und dadurch beispielsweise die Menge speicherbarer elektrischer Energie erhöht werden. Weiterhin kann bei einer vorstehend beschriebenen beispielhaften Speisung des Ladestroms in den Zwischenkreis des Antriebs diese Energie auch für einen Anfahrvorgang genutzt werden, bei welchem üblicherweise den Energiespeicher stark belastende Ströme fließen. Sofern, wie vorstehend ebenfalls beschrieben, auch Hilfsbetriebe des Schienenfahrzeugs aus dem Zwischenkreis versorgt werden, können diese in gleicher Weise für einen längeren Zeitraum aus dem Ladestrom gespeist werden, was ebenfalls zu einer geringeren Belastung des Energiespeichers führt.

Insbesondere bei einer Nutzung des Ladestroms für den Anfahrvorgang des Schienenfahrzeugs muss sichergestellt werden, dass bei der Trennung des Stromabnehmers von dem Leiter, sei es aufgrund des Erreichens des Endes des Leiters oder gesteuert, keine Ladespannung an dem Leiter mehr anliegt, da ansonsten die Gefahr eines Überschlags besteht. Es ist daher erforderlich, seitens der fahrzeugseitigen Ladevorrichtung den Ladestrom mittels des Ladereglers zu reduzieren oder die Trennung des Ladereglers von dem Stromabnehmer vor einer solchen Situation vorzunehmen, damit ausreichend Zeit für das Erkennen seitens der streckenseitigen Ladevorrichtung, dass kein Ladestrom mehr fließt, und das Wiederanlegen der Kleinspannung an dem Leiter verbleibt, bevor der Stromabnehmer von dem Leiter getrennt wird.

Gemäß einer weiteren Weiterbildung des Verfahrens wird für das Beginnen des Ladevorgangs, sofern das Schienenfahrzeug eine Mehrzahl Stromabnehmer aufweist, das Anlegen der Kleinspannung durch die streckenseitige Ladevorrichtung erst beendet, wenn alle für den Ladevorgang verwendeten Stromabnehmer mit dem Leiter elektrisch verbunden sind.

Das Schienenfahrzeug weist beispielsweise mehrere Stromabnehmer auf, wenn es über mehrere Antriebe, insbesondere eine Mehrfachtraktion, verfügt. Bei einem vorstehend beispielhaft genannten Triebzug kann beispielsweise ein jeweiliger Antrieb in den Endwagen angeordnet sein, deren Energiespeicher getrennt voneinander über einen jeweiligen Stromabnehmer und fahrzeugseitige Ladevorrichtungen geladen werden. Weiterhin kann das Schienenfahrzeug auch aus zwei zu einer Zugeinheit verkuppelten Triebzügen bestehen, wobei jeder einen oder mehrere Antriebe sowie Energiespeicher aufweist.

Dass die Ladespannung erst an den Leiter angelegt wird, wenn alle für einen Ladevorgang verwendeten Stromabnehmer mit dem Leiter verbunden sind, kann beispielsweise dadurch sichergestellt werden, dass die elektrische Last erst dann auf den Stromabnehmer geschaltet wird, wenn alle Stromabnehmer mit dem Leiter elektrisch verbunden sind. Insbesondere bei einem vorstehend beschriebenen Anlegen der Ladespannung bereits während des Einfahrens des Schienenfahrzeugs in den Bereich, in dem der Leiter angeordnet ist, könnten ansonsten nach einem elektrischen Verbinden eines ersten Stromabnehmers mit dem Leiter die vorstehend beschriebenen erfindungsgemäßen Schritte durchlaufen werden und in dem Anlegen der Ladespannung durch die streckenseitige Ladevorrichtung resultieren. Ein sich erst anschließend mit dem Leiter elektrisch verbindender Stromabnehmer, beispielsweise eines nachfolgenden Wagens oder gekuppelten Triebzugs, würde in diesem Fall direkt auf das Potenzial der Ladespannung treffen und einen möglichen Überschlag verursachen.

Gemäß einer weiteren Weiterbildung des Verfahrens werden der streckenseitigen Ladevorrichtung von der fahrzeugseitigen Ladevorrichtung Informationen bezüglich einer Identifikation des Schienenfahrzeugs, einer Anzahl für den Ladevorgang verwendeter Stromabnehmer und/oder eine elektrische Verbindung des oder der Stromabnehmer mit dem Leiter signalisiert.

Insbesondere wenn das Schienenfahrzeug mehrere Stromabnehmer aufweist, ermöglicht eine Signalisierung einerseits der Anzahl der für einen Ladevorgang zu verbindenden Stromabnehmer, andererseits des Status der jeweiligen Verbindung der Stromabnehmer mit dem Leiter, dass die Ladespannung seitens der streckenseitigen Ladevorrichtung erst angelegt wird, wenn alle für den Ladevorgang vorgesehenen Stromabnehmer mit dem Leiter verbunden sind. Die Anzahl Stromabnehmer kann alternativ auch implizit über eine Identifikationsinformation des Schienenfahrzeugs, insbesondere einer eindeutigen Identifikationsnummer des Schienenfahrzeugs und/oder des Schienenfahrzeugtyps, der streckenseitigen Ladevorrichtung signalisiert werden, wenn in dieser beispielsweise eine Datenbank mit weitergehenden Informationen zu einem jeweiligen Schienenfahrzeug bzw. Schienenfahrzeugtyps vorgehalten wird.

Sofern das Schienenfahrzeug über mehrere fahrzeugseitige Ladevorrichtungen verfügt, beispielsweise bei einer vorstehend genannten Mehrfachtraktion, erfolgt die Signalisierung beispielsweise durch eine der Ladevorrichtungen, vorzugsweise von der Ladevorrichtung, deren Stromabnehmer sich zuerst mit dem Leiter elektrisch verbindet. Hierdurch wird vorteilhaft sichergestellt, dass die Information über die Anzahl Stromabnehmer und gegebenenfalls deren jeweiliger Status der streckenseitigen Ladevorrichtung frühestmöglich zur Verfügung steht und damit die Gefahr, dass diese bereits eine Ladespannung an den Leiter anlegt, bevor alle für den Ladevorgang vorgesehenen Stromabnehmer mit dem Leiter verbunden sind, verringert wird. Der jeweilige Status der Stromabnehmer kann alternativ auch von den jeweiligen fahrzeugseitigen Ladevorrichtungen signalisiert werden oder, wenn auf jeden der Stromabnehmer eine elektrische Last geschaltet wird, anhand des fließenden Stroms von der streckenseitigen Ladevorrichtung erkannt werden.

Auch der fahrzeugseitigen Ladevorrichtung können von der streckenseitigen Ladevorrichtung Informationen signalisiert werden, beispielsweise bezüglich einer Identifikation der streckenseitigen Ladevorrichtung und/oder einer Länge des Leiters, wobei letztere Information wiederum bereits implizit der Identifikationsinformation zugeordnet sein kann, wenn in der fahrzeugseitigen Ladevorrichtung eine Datenbank mit weitergehenden Informationen zu den streckenseitigen Ladevorrichtungen vorgehalten wird. Die Kenntnis der Länge des Leiters kann dabei insbesondere dazu dienen, bei Nutzung des Ladestroms für den Anfahrvorgang rechtzeitig vor Erreichen des Endes des Leiters den Ladestrom zu verringern oder den Laderegler von dem Stromabnehmer zu trennen, um ein Anlegen der Kleinspannung an dem Leiter durch die streckenseitige Ladevorrichtung zu bewirken, bevor die Verbindung insbesondere des in Fahrtrichtung ersten Stromabnehmers von dem Leiter getrennt wird.

Gemäß einer auf der vorstehenden Weiterbildung basierenden Ausgestaltung werden die Informationen leitungsbasiert über den Leiter signalisiert.

Vorteilhaft wird hierdurch der elektrischen Verbindung der streckenseitigen Ladevorrichtung mit der fahrzeugseitigen Ladevorrichtung dienende Leiter auch als Medium für eine Übertragung insbesondere der in der vorstehenden Weiterbildung genannten Informationen verwendet, sodass keine Übertragung dieser Information über beispielsweise eine gesonderte Funkschnittstelle erforderlich ist. Die Signalisierung über den Leiter kann gemäß leitungsbasierten Kommunikationsprotokollen, insbesondere bekannten Protokollen für eine so genannte Powerline Communication, erfolgen. Derartige Protokolle ermöglichen auch getrennte Signalisierung durch mehrere fahrzeugseitige Ladevorrichtungen, wobei eine Signaltrennung beispielsweise über eine Zeit- und/oder Frequenzmodulation erfolgen kann.

Gemäß einem zweiten Aspekt der Erfindung wird eine Anordnung zum Steuern eines Vorgangs zum Laden zumindest eines Energiespeichers eines Schienenfahrzeugs, wobei der Energiespeicher einer Versorgung eines Antriebs des Schienenfahrzeugs mit elektrischer Energie dient, vorgeschlagen. Dabei weist die Anordnung eine streckenseitigen Ladevorrichtung, welche mit einem in einem begrenzten Bereich eines Streckenabschnitts eines Schienennetzes angeordneten elektrischen Leiter verbunden ist, und eine fahrzeugseitigen Ladevorrichtung, welche mit dem Energiespeicher und zumindest einem Stromabnehmer zum Verbinden mit dem elektrischen Leiter verbunden ist, auf. Zum Steuern eines Beginnens des Ladevorgangs sind eine Steuereinrichtung der streckenseitigen Ladevorrichtung ausgestaltet, alternativ eine Ladespannung oder eine Kleinspannung an den elektrischen Leiter zu legen, eine Steuereinrichtung der fahrzeugseitigen Ladevorrichtung ausgestaltet, das Anliegen einer Kleinspannung an dem Leiter zu erkennen und eine elektrische Last auf den Stromabnehmer zu schalten, wobei die Steuereinrichtung der streckenseitigen Ladevorrichtung ferner dazu ausgestaltet ist, ein Fließen eines Laststroms in dem Leiter zu erkennen, das Anlegen der Kleinspannung zu beenden und die Ladespannung an den elektrischen Leiter zu legen, und die Steuereinrichtung der fahrzeugseitigen Ladevorrichtung ferner dazu ausgestaltet ist, das Anliegen der Ladespannung an dem Leiter zu erkennen, die elektrische Last von dem Stromabnehmer zu trennen und einen mit dem Energiespeicher elektrisch verbundenen Laderegler mit dem Stromabnehmer elektrisch zu verbinden.

Gemäß einer Weiterbildung der Anordnung sind zum Steuern eines Beendens des Ladevorgangs die fahrzeugseitige Ladevorrichtung ferner dazu ausgestaltet, den Fluss des Ladestroms mittels des Ladereglers unter einen vorgegebenen Schwellwert zu verringern oder die elektrische Verbindung des Ladereglers mit dem Stromabnehmer zu trennen, und die streckenseitige Ladevorrichtung ferner dazu ausgestaltet, zu erkennen, dass ein Ladestrom unterhalb des Schwellwertes oder kein Ladestrom mehr in dem Leiter fließt, und wieder die Kleinspannung an den Leiter anzulegen. Wiederum kann, sofern erforderlich, die fahrzeugseitige Ladevorrichtungnach Erkennen des Anliegens der Kleinspannung an dem Leiter ergänzend eine Trennung der elektrischen Verbindung des Stromabnehmers mit dem Leiter steuern.

Gemäß einer weiteren Weiterbildung der Anordnung ist die fahrzeugseitige Ladevorrichtung ferner dazu ausgestaltet, den Stromabnehmer bei einem Einfahren des Schienenfahrzeugs in den Bereich des Streckenabschnitts mit dem Leiter elektrisch zu verbinden, und/oder die elektrische Verbindung des Stromabnehmers mit dem Leiter bei einem Ausfahren des Schienenfahrzeugs aus dem Bereich des Streckenabschnitts zu trennen.

Gemäß einer weiteren Weiterbildung der Anordnung ist zum Steuern des Beginnens des Ladevorgangs, sofern das Schienenfahrzeug eine Mehrzahl Stromabnehmer aufweist, die streckenseitige Ladevorrichtung ferner dazu ausgestaltet ist, das Anlegen der Kleinspannung erst zu beenden, wenn alle für den Ladevorgang verwendeten Stromabnehmer mit dem Leiter verbunden sind, oder die fahrzeugseitige Ladevorrichtung dazu ausgestaltet, die elektrische Last auf zumindest einen der Stromabnehmer erst zu schalten, wenn alle für den Ladevorgang verwendeten Stromabnehmer mit dem Leiter verbunden sind.

Gemäß einer weiteren Weiterbildung der Anordnung ist die fahrzeugseitige Ladevorrichtung ferner dazu ausgestaltet, Informationen bezüglich einer Identifikation des Schienenfahrzeugs, einer Anzahl für den Ladevorgang verwendeter Stromabnehmer und/oder eine elektrische Verbindung des oder der Stromabnehmer mit dem Leiter zu der streckenseitigen Ladevorrichtung zu signalisieren.

Gemäß einer auf der vorstehenden Weiterbildung basierenden Ausgestaltung der Anordnung sind die fahrzeugseitige Ladevorrichtung und die streckenseitige Ladevorrichtung jeweils dazu ausgestaltet, die Informationen über den Leiter zu signalisiert bzw. zu empfangen.

Ein dritter Aspekt der Erfindung betrifft eine Ladevorrichtung in einem Schienenfahrzeug, welche mit zumindest einem Energiespeicher zur Versorgung eines Antriebs des Schienenfahrzeugs verbunden ist und über einen Stromabnehmer mit einem in einem begrenzten Bereich eines Streckenabschnitts eines Schienennetzes angeordneten elektrischen Leiter verbindbar ist. Die fahrzeugseitige Ladevorrichtung weist eine Steuereinrichtung zum Steuern eines Beginnens eines Ladevorgangs zum Laden des Energiespeichers auf, wobei die Steuereinrichtung ausgestaltet ist, ein Anliegen einer Kleinspannung an dem Leiter zu erkennen, nach Erkennen des Anliegens der Kleinspannung eine elektrische Last auf den Stromabnehmer zu schalten, das Anliegen einer Ladespannung an dem Leiter zu erkennen und nach Erkennen der Ladespannung die elektrische Last von dem Stromabnehmer zu trennen und einen mit dem Energiespeicher elektrisch verbundenen Laderegler mit dem Stromabnehmer elektrisch zu verbinden.

Gemäß einer Weiterbildung der fahrzeugseitigen Ladevorrichtung ist die Steuereinrichtung ferner zum Steuern eines Beendens des Ladevorgangs ausgestaltet, den Fluss des Ladestroms mittels des Ladereglers unterhalb eines vorgegebenen Schwellwertes zu verringern die elektrische Verbindung des Ladereglers mit dem Stromabnehmer zu trennen und nach Erkennen, dass wieder eine Kleinspannung an dem Leiter anliegt, die elektrische Verbindung des Stromabnehmers mit dem Leiter zu trennen.

Gemäß einem vierten Aspekt der Erfindung weist ein Schienenfahrzeug zumindest einen elektrischen Antrieb, einen Energiespeicher zur Versorgung des Antriebs mit elektrischer Energie, einen Stromabnehmer zur Verbindung mit einem streckenseitig angeordneten elektrischen Leiter und eine fahrzeugseitige Ladevorrichtung gemäß dem dritten Aspekt der Erfindung auf.

Ein solches Schienenfahrzeug kann insbesondere als ein Triebzug, eine Lokomotive, eine Straßenbahn, eine Untergrundbahn oder ein sonstiges bekanntes Schienenfahrzeug für den Nah- und Fernverkehr ausgestaltet sein.

Ein fünfter Aspekt der Erfindung betrifft eine Ladevorrichtung an einem Schienennetz, welche mit einem in einem begrenzten Bereich eines Streckenabschnitts des Schienennetzes angeordneten elektrischen Leiter verbunden ist und während eines Ladevorgangs eine Ladespannung und ansonsten eine Kleinspannung an den Leiter anlegt. Die streckenseitige Ladevorrichtung weist eine Steuereinrichtung zum Steuern eines Beginnens des Ladevorgangs zum Laden zumindest eines Energiespeichers eines Schienenfahrzeugs über den Leiter auf, wobei die Steuereinrichtung ausgestaltet ist, ein Fließen eines Laststroms in dem Leiter zu erkennen und nach Erkennen des Fließens des Laststroms das Anlegen der Kleinspannung zu beenden und die Ladespannung an den Leiter anzulegen.

Gemäß einer Weiterbildung der streckenseitigen Ladevorrichtung ist die Steuereinrichtung ferner zum Steuern eines Beendens des Ladevorgangs ausgestaltet, nach Erkennen, dass ein Laststrom unterhalb eines vorgegebenen Schwellwertes oder kein Ladestrom mehr in dem Leiter fließt, wieder die Kleinspannung an den Leiter anzulegen.

Im Folgenden wird die Erfindung anhand von Ausführungsbeispielen näher erläutert. Dabei zeigen:
- FIG 1: eine schematische Seitenansicht eines Schienenfahrzeugs,
- FIG 2: eine schematische Darstellung für einen Ladevorgang erforderlicher fahrzeug- und streckenseitiger Komponenten,
- FIG 3: einen Streckenabschnitt eines Schienennetzes mit zwei Haltestellen und einer jeweiligen streckenseitigen Ladevorrichtung,
- FIG 4: eine Abfolge eines Ladevorgangs für ein Schienenfahrzeug mit einem Stromabnehmer, und
- FIG 5: eine Abfolge eines Ladevorgangs für ein Schienenfahrzeug mit zwei Stromabnehmern.

Aus Gründen der Übersichtlichkeit werden in den Figuren für gleiche bzw. gleich oder nahezu gleich wirkende Komponenten dieselben Bezugszeichen verwendet.

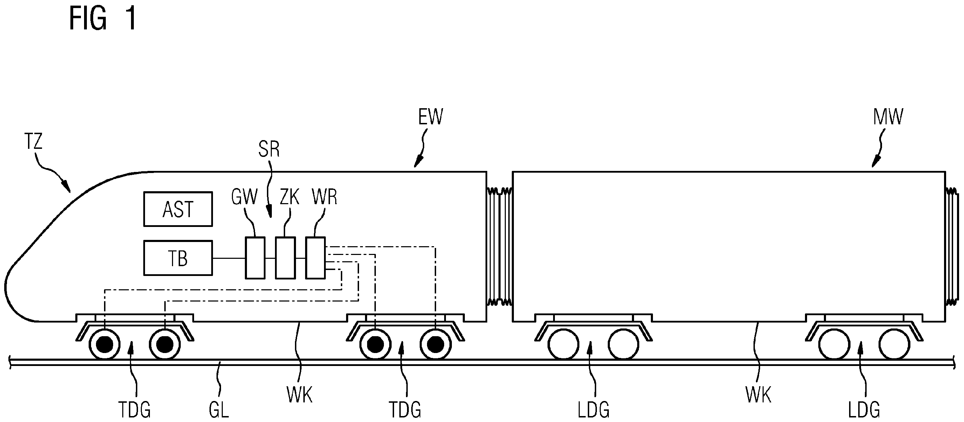

FIG 1 stellt schematisch ein Schienenfahrzeug dar, welches beispielhaft als ein Triebzug TZ ausgestaltet ist. Triebzüge bestehen üblicherweise aus zwei Endwagen EW sowie einem oder mehreren zwischen diesen angeordneten Mittelwagen MW. Sowohl Endwagen EW als auch Mittelwagen MW weisen jeweils einen Wagenkasten WK auf, der sich über Fahrgestelle, insbesondere Drehgestelle, auf einem Gleis GL eines Schienennetzes abstützt. In der FIG 1 verfügt der Endwagen EW beispielhaft über zwei Triebdrehgestelle TDG, während der Mittelwagen über zwei Laufdrehgestelle LDG verfügt. Triebdrehgestelle TDG unterscheiden sich von Laufdrehgestellen LDG insbesondere dadurch, dass eine oder mehrere Achsen des Drehgestells von elektrischen Antriebs- bzw. Traktionsmotoren angetrieben werden und damit für einen Vortrieb des Schienenfahrzeugs sorgen. Andere bekannte Anordnungen oder Ausgestaltungen der Fahrgestelle sind in gleicher Weise einsetzbar.

Der beispielhafte Endwagen EW des Triebzugs TZ verfügt neben den genannten Triebdrehgestellen TDG samt Traktionsmotoren über weitere Komponenten für den Antrieb des Fahrzeugs. Zu diesen Komponenten gehört ein Stromrichter SR mit einem von einem Gleichspannungs-Zwischenkreis ZK gespeisten Traktionswechselrichter WR, welcher die jeweiligen Drehzahlen und Drehmomente der Traktionsmotoren in den Triebdrehgestellen TDG steuert. Der Gleichspannungs-Zwischenkreis ZK wird in dem Beispiel der FIG 1 wiederum über einen Gleichspannungswandler GW aus einem elektrischen Energiespeicher, insbesondere einer so genannten Traktionsbatterie TB, mit elektrischer Energie gespeist. Der Gleichspannungswandler GW ist dabei beispielsweise als ein so genannter Hochsetzsteller ausgeführt, der die Ausgangsspannung der Traktionsbatterie TB auf eine üblicherweise höhere Gleichspannung des Zwischenkreises ZK transferiert. Aus dem Zwischenkreis ZK können neben dem Traktionswechselrichter WR auch in der FIG 1 nicht dargestellte Hilfsbetriebe des Triebzugs TZ, beispielsweise Klimaanlagen für eine Klimatisierung der Fahrgasträume in den Wagenkästen WK der Wagen, gespeist werden, wobei diese abhängig von einer jeweiligen Betriebsspannung ebenfalls über einen Gleichspannungswandler oder Hilfsbetriebewechselrichter mit dem Zwischenkreis ZK verbunden sein können.

Die Steuerung der genannten Komponenten des Antriebs sowie weiterer Komponenten des Triebzugs erfolgt beispielsweise in bekannter Weise über eine zentrale Antriebssteuerung AST.

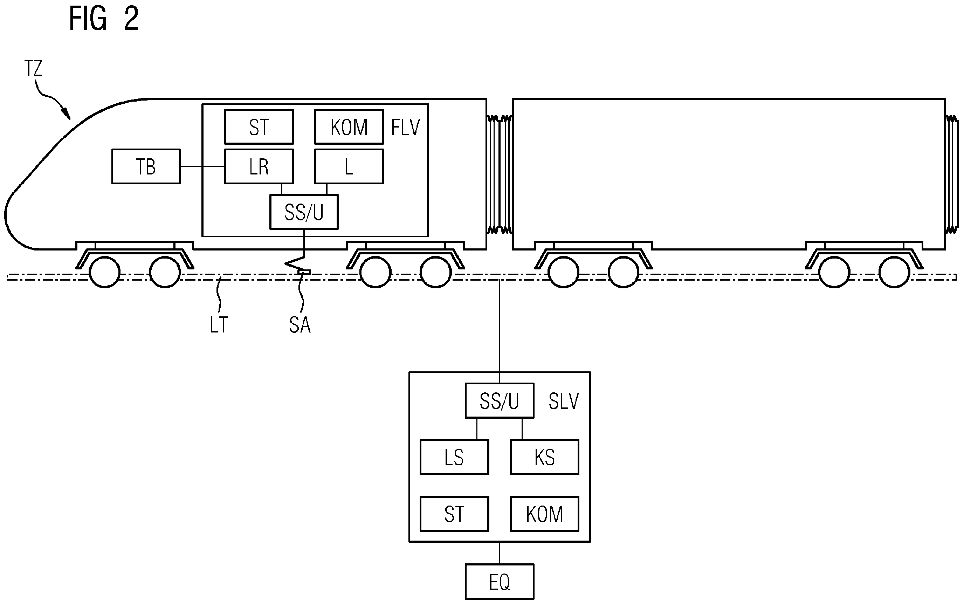

FIG 2 zeigt beispielhaft weitere Komponenten in dem Triebzug TZ der FIG 1 sowie streckenseitige Komponenten, die dem Laden der Traktionsbatterie TB dienen. Eine streckenseitige Ladevorrichtung SLV ist mit einer ebenfalls streckenseitigen Energiequelle EQ, von der sie mit elektrischer Energie insbesondere für den Ladevorgang versorgt wird, sowie mit einem Leiter LT verbunden. Der Leiter LT ist beispielsweise als eine bekannte Stromschiene ausgestaltet und im Bereich des Gleisbetts angeordnet. In der FIG 2 ist der Leiter beispielhaft mittig und gegenüber dem Gleis erhöht angeordnet, eine andere Anordnung des Leiters, insbesondere seitlich des Gleises, ist jedoch in gleicher Weise möglich. Eine fahrzeugseitige Ladevorrichtung FLV ist mit der Traktionsbatterie TB sowie einem Stromabnehmer SA verbunden, mittels dem die fahrzeugseitige Ladevorrichtung FLV mit dem Leiter LT elektrisch verbunden werden kann. Der Stromabnehmer SA ist derart an dem Endwagen angeordnet, dass ein mechanischer Kontakt beispielsweise eines Schleifschuhs mit dem Leiter LT verlässlich hergestellt werden kann. Dabei kann die Höhe des Stromabnehmers SA, sofern erforderlich, beispielsweise mittels eines bekannten, in der FIG 2 jedoch nicht speziell dargestellten, Aktuators variiert werden.

Sowohl die streckenseitige SLV als auch die fahrzeugseitige Ladevorrichtung FLV weisen eine jeweilige Steuereinrichtung ST auf, welche die einzelnen nachfolgend beschriebenen Komponenten steuern. Dabei kann die Steuereinrichtung ST der fahrzeugseitigen Ladevorrichtung FLV auch als Teil der bezüglich FIG 1 genannten Antriebssteuerung AST verwirklicht sein. Derartige Steuereinrichtungen sind in bekannter Weise als elektronische Schaltungen mit einem oder mehreren Prozessoren sowie zumindest einem Datenspeicher zum Speichern von Steuerungssoftware sowie für die Steuerung benötigter Informationen verwirklicht.

Außerhalb eines Ladevorgangs wird von einer Kleinspannungseinrichtung KS der streckenseitigen Ladevorrichtung SLV eine Kleinspannung bzw. eine Schutzkleinspannung an dem Leiter LT angelegt. Die Kleinspannungseinrichtung KS kann beispielsweise von der Energiequelle EQ gespeist werden, alternativ aber auch als eine Batterie mit einem nachgeschalteten Spannungswandler verwirklicht sein, wobei diese wiederum mit elektrischer Energie der Energiequelle EQ ladbar ist. Die von der Kleinspannungseinrichtung KS generierte Kleinspannung kann eine Gleich- oder Wechselspannung sein und beispielsweise eine konstante Spannung in einem Spannungsbereich zwischen 25V und 60V entsprechend den Vorgaben für Schutzkleinspannungen aufweisen. Gegebenenfalls muss die Kleinspannung nicht dauerhaft an dem Leiter LT anliegen, sondern wird erst angelegt, wenn sich der Triebzug TZ dem Bereich, in dem der Leiter LT angeordnet ist, nähert. Dies kann in bekannter Weise durch Ermittlung einer aktuellen Position des Triebzugs, beispielsweise bei Überfahren eines geeigneten Sensors im Gleisbett, welcher in einem bestimmten Abstand zu dem Bereich angeordnet ist, festgestellt werden.

Sobald der Stromabnehmer SA des Triebzugs TZ, beispielsweise bei einem Einfahren in den Bereich und gegebenenfalls gesteuert durch die Steuereinrichtung ST, eine elektrische Verbindung mit dem Leiter LT hergestellt hat, wird mittels eines Spannungssensors SS in der fahrzeugseitigen Ladevorrichtung das Anliegen der Kleinspannung erkannt. Nach Erkennen der Kleinspannung wird von der Steuereinrichtung ST gesteuert eine elektrische Last L auf den Stromabnehmer SA geschaltet. Dies kann beispielsweise mittels eines entsprechenden Schaltens eines Umschalters U der fahrzeugseitigen Ladevorrichtung FLV erfolgen. Die aufgeschaltete Last L, beispielsweise ein Widerstand mit einem bestimmten Widerstandswert sowie einem vorgeschalteten Leistungshalbleiter, führt zu einem geregelten Stromfluss in dem Leiter LT. Dieser Stromfluss wird mittels eines Stromsensors SS in der streckenseitigen Ladevorrichtung SLV erkannt, woraufhin von der Steuereinrichtung ST der streckenseitigen Ladevorrichtung SLV gesteuert das Anlegen der Kleinspannung durch die Kleinspannungseinrichtung KS beendet wird. Das Beenden bzw. ein Trennen der Kleinspannungseinrichtung KS von dem Leiter LT kann dabei beispielsweise mittels eines von der Steuereinrichtung ST gesteuerten Schaltens eines Umschalters U der streckenseitigen Ladevorrichtung SLV erfolgen.

Anschließend wird, wiederum von der Steuereinrichtung ST gesteuert, eine von einer Ladespannungseinrichtung LS bereitgestellte Ladespannung an dem Leiter LT angelegt. Dies kann in gleicher Weise mittels eines Schaltens des Umschalters U erfolgen, welcher eine elektrische Verbindung zwischen der Ladespannungseinrichtung LS und dem Leiter LT herstellt. Die Ladespannungseinrichtung LS generiert, beispielsweise gesteuert durch die Steuereinrichtung ST, die Ladespannung aus der von der Energiequelle EQ bereitgestellten Speisespannung. Abhängig von der bereitgestellten Speisespannung und der gewünschten Ladespannung ist die Ladespannungseinrichtung LS entsprechend zu wählen bzw. anzusteuern. Sind sowohl Speisespannung als auch Ladespannung Wechselspannungen, so kann als Ladespannungseinrichtung LS beispielsweise ein Wechselspannungswandler eingesetzt werden, welcher die Speisespannung auf das gewünschte Spannungsniveau der Ladespannung wandelt. Wird als Ladespannung hingegen eine Gleichspannung verwendet, so kann als Ladespannungseinrichtung LS beispielsweise ein Gleichrichter eingesetzt werden, der sowohl eine Wandlung von Wechsel- in Gleichspannung durchführt, als auch das gewünschte Spannungsniveau der Ladespannung bereitstellt.

Das Anliegen der Ladespannung an dem Leiter LT wird von der fahrzeugseitigen Ladevorrichtung FLV mittels des Spannungssensors SS erkannt, woraufhin die elektrische Last L von dem Stromabnehmer SA getrennt und ein Laderegler LR mit dem Stromabnehmer SA verbunden wird. Dies kann, wiederum von der Steuereinrichtung ST gesteuert, mittels eines entsprechenden Schaltens des Umschalters U erfolgen. Der Laderegler LR regelt, insbesondere von der Steuereinrichtung ST gesteuert, abhängig von einem aktuellen Ladezustand sowie gegebenenfalls weiteren den Ladevorgang beeinflussenden Parametern der Traktionsbatterie TB, die Batterieladespannung und den Ladestrom.

In dem Beispiel der FIG 2 ist der Laderegler LR als Teil der fahrzeugseitigen Ladevorrichtung FLV direkt mit der Traktionsbatterie TB verbunden. Dabei kann dieser die gleichen elektrischen Anschlüsse der Traktionsbatterie TB verwenden, die auch der elektrischen Verbindung mit dem Gleichspannungswandler GW entsprechend dem Beispiel der FIG 1 dienen. Alternative Ausgestaltungen des Ladereglers LR sowie dessen Anordnung bezüglich anderer Komponenten des Stromrichters SR sind jedoch ebenso möglich. Sofern die Ladespannung eine Gleichspannung ist und dem Spannungsniveau des Gleichspannungs-Zwischenkreises ZK entspricht, kann die Ladespannung auch an den Zwischenkreis ZK angelegt werden und der Gleichspannungswandler GW die Funktion des Ladereglers LR ausführen. Sofern die Ladespannung nicht das Spannungsniveau des Zwischenkreises ZK aufweist oder eine Wechselspannung ist, kann die Ladespannung beispielsweise mittels eines zusätzlichen Gleichspannungswandler bzw. Gleichrichters auf das Spannungsniveau des Zwischenkreises gewandelt werden und der Gleichspannungswandler GW ebenfalls die Funktion des Ladereglers LR ausführen.

Wenn von dem Laderegler LR bzw. von der Steuereinrichtung ST feststellt wird, dass die Traktionsbatterie TB ausreichend geladen wurde oder eine zum Laden zur Verfügung stehende Zeitspanne abgelaufen ist, wird der Laderegler LR von dem Stromabnehmer SA getrennt, sodass kein Ladestrom mehr in den Laderegler LR bzw. in den Zwischenkreis ZK fließt. Diese Trennung kann wiederum von der Steuereinrichtung ST gesteuert mittels eines entsprechenden Schaltens des Umschalters U erfolgen. Dass kein Ladestrom mehr fließt, wird von der streckenseitigen Ladevorrichtung SLV mittels des Stromsensors SS erkannt, woraufhin von der Steuereinrichtung ST der streckenseitigen Ladevorrichtung SLV gesteuert das Anlegen der Ladespannung beendet und wieder die Kleinspannung der Kleinspannungseinrichtung KS an den Leiter angelegt wird. Das Beenden des Anlegens der Ladespannung erfolgt beispielsweise mittels einer Trennung der Ladespannungseinrichtung LS von dem Leiter LT und das Wiederanlegen der Kleinspannung mittels eines Verbindens der Kleinspannungseinrichtung KS mit dem Leiter LT. Dieses Trennen und Verbinden kann, wiederum gesteuert durch die Steuereinrichtung ST, mittels eines entsprechendes Schaltens des Umschalters U in der streckenseitigen Ladevorrichtung SLV erfolgen.

Das Wiederanliegen der Kleinspannung an dem Leiter LT wird von der fahrzeugseitigen Ladevorrichtung FLV mittels des Spannungssensors SS erkannt. Der Steuereinrichtung ST ist hierdurch bekannt, dass eine Trennung des Stromabnehmers SA von dem Leiter LT gefahrlos möglich ist und steuert, sofern vorhanden, beispielsweise einen Aktuator des Stromabnehmers SA an, der den Stromabnehmer SA mechanisch von dem Leiter LT ablöst und einen ausreichenden Abstand herstellt. Sofern der Stromabnehmer SA automatisch einen Kontakt mit dem Leiter LT herstellt und wieder trennt, insbesondere bei einem Ein- und Ausfahren in den bzw. aus dem Bereich eines Strecken- bzw. Gleisabschnitts, in dem der Leiter LT angeordnet ist, stellt die Steuereinrichtung ST hierdurch auch sicher, dass kein Überschlag aufgrund eines noch anliegenden Spannungspotenzials der Ladespannung auftreten kann.

Der Triebzug TZ kann alternativ zu dem vorstehend beschriebenen Beispiel auch mehrere Stromabnehmer SA aufweisen. Dies kann beispielsweise bei einer Mehrfachtraktion mit jeweiligen Antriebskomponenten und einer jeweiligen Traktionsbatterie TB in jedem der beiden Endwagen der Fall sein. Vorzugsweise verfügen die fahrzeug- und streckenseitigen Ladevorrichtungen FLV, SLV über eine jeweilige Kommunikationseinrichtung KOM. Mittels dieser Einrichtungen können beispielsweise Informationen, die eine Identifikation des Triebzugs bzw. des Triebzugtyps ermöglichen, von der Kommunikationseinrichtung KOM der fahrzeugseitigen Ladevorrichtungen FLV zu der Kommunikationseinrichtung KOM der streckenseitigen Ladevorrichtung SLV signalisiert werden. Die Übertragung der Informationen erfolgt dabei beispielsweise über den Leiter LT unter Verwendung bekannter Kommunikationsprotokolle, insbesondere Protokolle einer so genannten Powerline Communication. Aus der signalisierten Identität des Triebzugs bzw. des Triebzugtyps kann die Steuereinrichtung ST der streckenseitigen Ladevorrichtung SLV beispielsweise eine Anzahl Stromabnehmer SA des Triebzugs TZ ableiten, wenn diese der Identität des Triebzugs bzw. des Triebzugtyps eindeutig zugeordnet und in einer Speichereinrichtung der Steuereinrichtung ST hinterlegt ist. Eine Kenntnis der Anzahl Stromabnehmer SA ist für die Steuereinrichtung ST insbesondere von Bedeutung, um ein Anlegen der Ladespannung an dem Leiter LT erst anzusteuern, wenn alle Stromabnehmer SA mit diesem elektrisch verbunden sind.

Ergänzend zu einer direkten oder indirekten Signalisierung der Anzahl Stromabnehmer SA des Triebzugs TZ kann auch die Anzahl der für den beginnenden Ladevorgang verwendeten Stromabnehmer signalisiert wird, insbesondere wenn diese nicht der Gesamtzahl Stromabnehmer SA des Triebzugs TZ entspricht. Dieser Fall kann beispielsweise auftreten, wenn nur eine von zwei Traktionsbatterien TB geladen werden sollen, sodass auch nur deren Stromabnehmer SA mit dem Leiter LT elektrisch verbunden wird. Auch ist eine Signalisierung des Status der elektrischen Verbindung des jeweiligen Stromabnehmers SA mit dem Leiter LT sinnvoll, damit der Steuereinrichtung ST in der streckenseitigen Ladevorrichtung SLV zu einem frühestmöglichen Zeitpunkt bekannt ist, dass alle verwendeten Stromabnehmer SA mit dem Leiter LT elektrisch verbunden sind, um daraufhin die Ladespannung an dem Leiter LT anzulegen.

Alternativ zu der vorstehend beschriebenen Übertragung von Informationen über den Leiter LT kann eine Kommunikation zwischen den Ladevorrichtungen FLV, SLV bzw. deren Steuereinrichtungen ST auch funkbasiert erfolgen. Hierfür müssen die Steuereinrichtungen ST in den Ladevorrichtungen FLV, SLV über eine entsprechende Funkschnittstelle verfügen oder mit einer solchen verbunden sein. Mögliche Kommunikationsprotokolle für eine solche funkbasierte Kommunikation sind beispielsweise Protokolle basierend auf den bekannten IEEE 802.11 oder GSM-R -Standards.

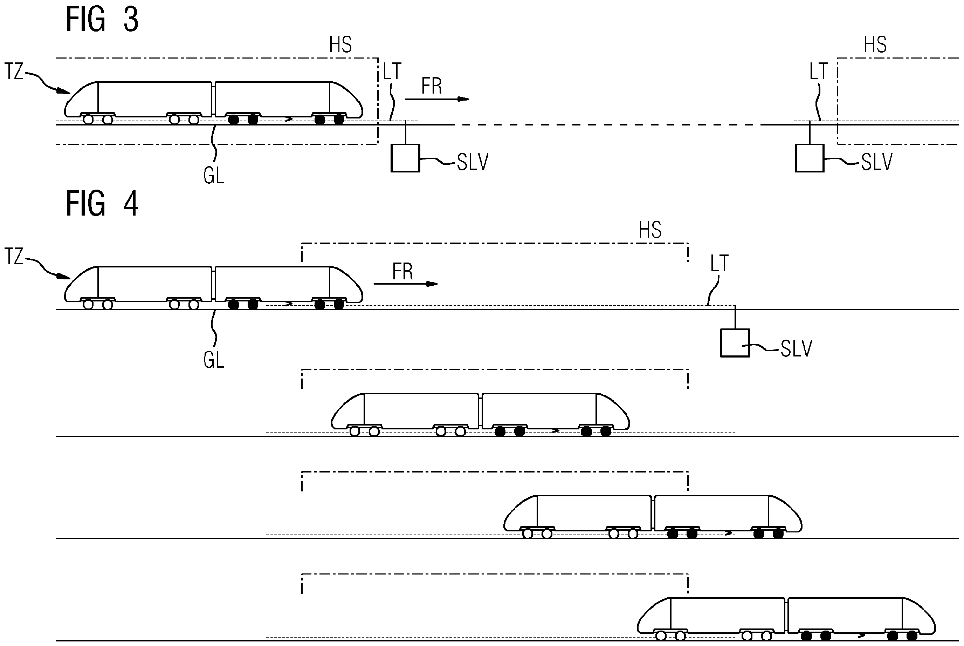

FIG 3 stellt beispielhaft einen Streckenabschnitt eines Schienennetzes dar, in dem jeweils im Bereich einer Haltestelle HS eine streckenseitige Ladevorrichtung SLV sowie ein Leiter LT angeordnet sind. Die Haltestellen HS dienen in bekannter Weise dem Ein- und Ausstieg von Fahrgästen in bzw. aus dem beispielhaft dargestellten Triebzug TZ. Entsprechend der vorstehenden Beschreibung ist der Leiter LT im Bereich des Gleisbettes der Gleise GL angeordnet. Ferner reicht der Leiter LT beispielshaft beidseitig über die Länge der Haltestelle HS, insbesondere über die Länge des Bahnsteigs der Haltestelle hinaus, um einerseits den für die Ladung der Traktionsbatterie des Triebzugs TZ nutzbaren Zeitraum zu verlängern, andererseits die Energiezufuhr durch den Leiter auch für den Anfahrvorgang des Triebzugs TZ nutzen zu können. Während des Aufenthalts an der Haltestelle HS wird der Traktionsbatterie des Triebzugs TZ zumindest soviel elektrische Energie über den Leiter LT zugeführt, dass für eine anschließende Fahrt des Triebzugs TZ in Fahrtrichtung FR zu einer nächsten Haltestelle HS, an der die Traktionsbatterie wiederum geladen werden kann, ausreichend elektrische Energie für den Antrieb sowie gegebenenfalls die Hilfsbetriebe des Triebzugs zur Verfügung steht.

FIG 4 zeigt beispielhaft eine zeitliche Abfolge des Ladevorgangs eines Triebzugs TZ im Bereich einer Haltestelle HS. Wie in dem Beispiel der FIG 3 besteht der Triebzug TZ beispielhaft aus zwei Endwagen, wobei lediglich der in Fahrtrichtung FR erste Endwagen einen Antrieb sowie einen Stromabnehmer aufweist. Der Stromabnehmer ist derart an dem ersten Endwagen angeordnet, dass sein Schleifschuh automatisch einen mechanischen Kontakt mit dem Leiter LT herstellt und damit die fahrzeugseitige Ladevorrichtung elektrisch mit dem Leiter LT und der streckenseitigen Ladevorrichtung SLV verbindet. In der oberen ersten Darstellung fährt der Triebzug TZ in den Bereich der Haltestelle HS ein und der Stromabnehmer des vorderen Endwagens stellt einen Kontakt mit dem Leiter LT her. Entsprechend der vorstehenden Beschreibung läuft das Verfahren ab und ein Ladestrom wird von der streckenseitigen Ladevorrichtung an dem Leiter LT angelegt. Sofern dieser Prozess hinreichend schnell abläuft, kann bereits während des Einfahrens und bis zum Halt des Triebzugs TZ in der Haltestelle dessen Traktionsbatterie mittels des Ladestroms geladen werden. Die zweite Darstellung der FIG 4 zeigt die Situation eines Halts des Triebzugs in der Haltestelle, beispielsweise um Fahrgästen das Ein- und Aussteigen zu ermöglichen. Während des Halts wird die Traktionsbatterie des Triebzugs weiterhin über den Leiter von der streckenseitigen Ladevorrichtung geladen. In der dritten Darstellung der FIG 4 fährt der Triebzug wieder an und verlässt beschleunigend den Bereich der Haltestelle. Der Ladestrom liegt weiterhin an dem Leiter an und wird für den Antrieb des Triebzugs verwendet. Rechtzeitig vor Erreichen des Endes des Leiters muss entsprechend der vorstehenden Beschreibung das Anliegen des Ladestroms beendet werden, um einen möglichen Überschlag in dem Moment, wenn der mechanische Kontakt zwischen dem Leiter und dem Schleifschuh des Stromabnehmers getrennt wird, zu vermeiden. Mit dem Wiederanlegen der Kleinspannung an den Leiter durch die streckenseitige Ladevorrichtung wird der Ladevorgang an der Haltestelle beendet. In der unteren vierten Darstellung der FIG 4 ist der Stromabnehmer von dem Leiter getrennt und die weitere Beschleunigung und Fahrt des Triebzugs erfolgt durch Speisung des Antriebs durch die Traktionsbatterie, bis diese an einer nächsten Haltestelle wiederum geladen werden kann.

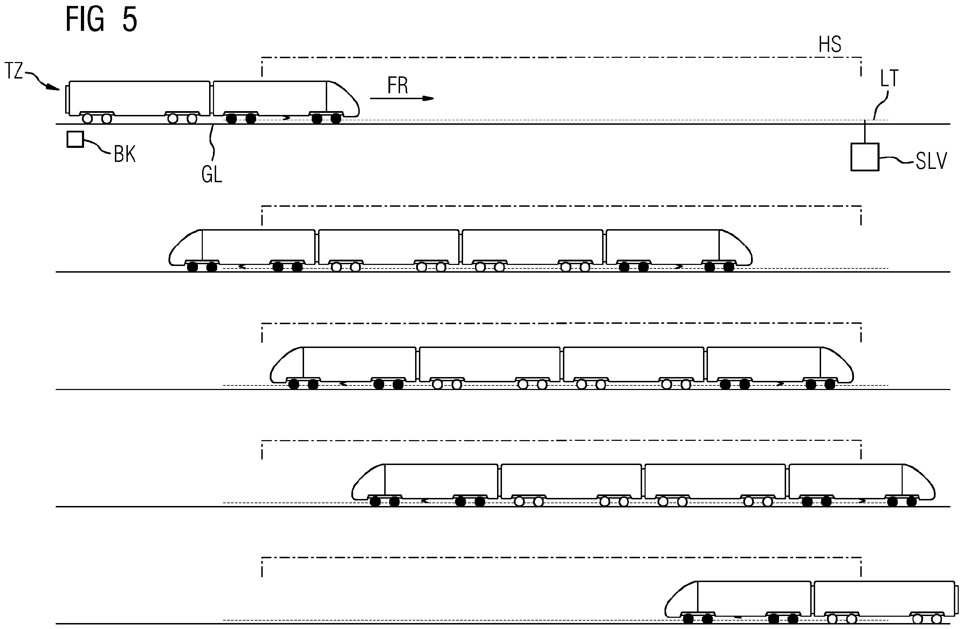

FIG 5 zeigt eine andere zeitliche Abfolge eines Ladevorgangs. wobei der Triebzug TZ in diesem Fall beispielhaft aus zwei Endwagen sowie zwischen diesen angeordneten zwei Mittelwagen besteht. Die beiden Endwagen weisen jeweils einen Antrieb mit einer Traktionsbatterie sowie einem Stromabnehmer auf. In gleicher Weise könnten beispielsweise auch zwei der in FIG 4 dargestellten Triebzüge zu einer Zugeinheit gekoppelt sein. In dem Beispiel der FIG 5 stellen die Stromabnehmer der Endwagen keinen automatischen mechanischen und damit elektrischen Kontakt mit dem Leiter her, sondern werden in dem Bereich der Strecke, in dem der Leiter angeordnet ist, beispielsweise gesteuert durch die fahrzeugseitige Ladevorrichtung oder manuell durch den Fahrzeugführer, mit dem Leiter in Kontakt gebracht. Informationen über diesen Bereich, insbesondere den Beginn und das Ende des Leiters bzw. dessen Länge, wird dem Triebzug beispielsweise von einer streckenseitig angeordneten Bake signalisiert, deren Aussendungen ein entsprechend kompatibler Empfänger an dem Triebzug empfängt. Der Beginn des Leiters wird dem Triebzug beispielsweise durch Übertragen von genauen Ortskoordinaten oder eines Abstands von dem Ort der Bake signalisiert. In Kenntnis des Beginns des Leiters kann der Stromabnehmer bzw. eine den Stromabnehmer mechanisch bewegende Vorrichtung entsprechend angesteuert werden, sodass dieser einen mechanischen Kontakt mit dem Leiter, an dem eine Kleinspannung anliegt, herstellt, wie es in der oberen ersten Darstellung der FIG 5 gezeigt ist. Da in der Situation der ersten Darstellung jedoch lediglich der erste der beiden Stromabnehmer des Triebzugs TZ mit dem Leiter LT mechanisch und damit elektrisch verbunden ist, schaltet die fahrzeugseitige Ladevorrichtung in dem in Fahrtrichtung FR vorderen Endwagen noch keine elektrische Last auf den Stromabnehmer auf, sondern wartet, bis auch der zweite Stromabnehmer im hinteren Endwagen mit dem Leiter elektrisch verbunden wurde, wie es die zweite Darstellung der FIG 5 zeigt. Wie vorstehend beschrieben, führt das Aufschalten einer elektrischen Last zum Anlegen der Ladespannung an den Leiter durch die streckenseitige Ladevorrichtung SLV, sodass die Traktionsbatterien in den Endwagen geladen werden können.

Das Laden der Traktionsbatterien setzt sich während des Halts des Triebzugs an der Haltestelle, wie er in der dritten Darstellung der FIG 5 gezeigt ist, fort bzw. solange fort, bis die Traktionsbatterien wieder vollständig oder mit zumindest soviel elektrischer Energie gefüllt sind, dass eine Weiterfahrt des Triebzugs bis zur nächsten Möglichkeit eines Ladens möglich ist. In der vierten Darstellung der FIG 5 fährt der Triebzug wieder an und verlässt beschleunigend und unter Nutzung des Ladestroms für den Anfahrvorgang den Bereich der Haltestelle. In Kenntnis des Endes des Leiters werden die beiden Ladevorrichtungen in den Endwagen von ihrem jeweiligen Stromabnehmer getrennt, bevor der Stromabnehmer des vorderen Endwagens das Ende des Leiters erreicht. Dies führt wie beschrieben dazu, dass die streckenseitige Ladevorrichtung die Kleinspannung wieder an den Leiter anlegt und die Stromabnehmer von den fahrzeugseitigen Ladevorrichtungen von dem Leiter mechanisch und elektrisch getrennt werden können, ohne das die Gefahr eines Überschlags besteht. In der fünften Darstellung der FIG 5 haben der vordere Endwagen sowie der erste Mittelwagen bereits der Bereich des Leiters verlassen und der Stromabnehmer des hinteren Endwagens ist bereits mechanisch von dem Leiter getrennt. Die Antriebe der beiden Endwagen werden allein aus der jeweiligen Traktionsbatterie gespeist.

Wie aus dem Beispiel der FIG 5 erkennbar ist, kann die Zeit für das Ein- und Ausfahren aus dem Bereich der Haltestelle aufgrund der Stromabnehmer an den beiden Enden des Triebzugs weniger für das Laden der Traktionsbatterien sowie für das Anfahren genutzt werden als in dem Beispiel der FIG 4, da das Anlegen der Ladespannung wie beschrieben erst nach Kontaktierung des Leiters durch den in Fahrtrichtung hintersten Stromabnehmer und das Wiederanlegen der Kleinspannung bereits vor Trennung vom Leiter durch den vordersten Stromabnehmer erfolgen kann bzw. erfolgen muss. In dem Beispiel der FIG 5 könnte diese Zeit durch eine größere Länge des Leiters vor und hinter dem Bereich der Haltestelle verlängert werden. Für diese Bereiche ist dann allerdings sicherzustellen, dass diese während des Anliegens der Ladespannung vor einem möglichen Kontakt mit Personen geschützt sind. Alternativ könnte die Zeit auch durch eine andere Anordnung der Stromabnehmer an dem Triebzug verlängert werden, beispielsweise durch eine Anordnung der Stromabnehmer unter den Mittelwagen, wodurch der Abstand zwischen diesen verringert wird, oder durch Nutzung lediglich eines Stromabnehmers beispielsweise in dem vorderen Endwagen, welcher mit beiden Ladevorrichtungen in den Endwagen verbunden ist.

## Patentansprüche

1. Verfahren zum Steuern eines Vorgangs zum Laden zumindest eines Energiespeichers (TB) eines Schienenfahrzeugs (TZ), wobei der Energiespeicher (TB) einer Versorgung eines Antriebs des Schienenfahrzeugs mit elektrischer Energie dient und das Laden des Energiespeichers (TB) mittels eines in einem begrenzten Bereich eines Streckenabschnitts eines Schienennetzes angeordneten elektrischen Leiters (LT) erfolgt, **gekennzeichnet dadurch, dass** von einer streckenseitigen Ladevorrichtung (SLV) eine Ladespannung an den Leiter (LT) anlegbar ist und ansonsten eine Kleinspannung an den Leiter (LT) angelegt wird,
bei dem
für ein Beginnen des Ladevorgangs
- zumindest ein mit der fahrzeugseitigen Ladevorrichtung (FLV) verbundener Stromabnehmer (SA) mit dem elektrischen Leiter (LT) verbunden wird,
- nach Erkennen durch die fahrzeugseitige Ladevorrichtung (FLV), dass die Kleinspannung an dem Leiter (LT) anliegt, eine elektrische Last (L) auf den Stromabnehmer (SA) geschaltet wird,
- nach Erkennen durch die streckenseitigen Ladevorrichtung (SLV), dass ein Laststroms in dem Leiter (LT) fließt, das Anlegen der Kleinspannung beendet und die Ladespannung an den Leiter (LT) angelegt wird, und
- nach Erkennen durch die fahrzeugseitige Ladevorrichtung (FLV), dass die Kleinspannung nicht mehr an dem Leiter (LT) anliegt, die elektrische Last (L) von dem Stromabnehmer (SA) getrennt wird, und
- nach Erkennen durch die fahrzeugseitige Ladevorrichtung (FLV), dass die Ladespannung an dem Leiter (LT) anliegt, ein mit dem Energiespeicher (TB) elektrisch verbundener Laderegler (LR) der fahrzeugseitigen Ladevorrichtung (FLV) mit dem Stromabnehmer (SA) elektrisch verbunden wird.

2. Verfahren nach Anspruch 1, bei dem
für ein Beenden des Ladevorgangs:
- der Fluss des Ladestroms mittels des Ladereglers (LR) unter einen vorgegebenen Schwellwert verringert oder die elektrische Verbindung des Ladereglers (LR) mit dem Stromabnehmer (SA) getrennt wird, und
- nach Erkennen durch die streckenseitige Ladevorrichtung (SLV), dass ein Ladestrom unterhalb des Schwellwertes oder kein Ladestrom mehr in dem Leiter (LT) fließt, wieder die Kleinspannung an den Leiter (LT) angelegt wird.

3. Verfahren nach Anspruch 1 oder 2, bei dem
- der Stromabnehmer (SA) bei einem Einfahren des Schienenfahrzeugs (TZ) in den Bereich des Streckenabschnitts mit dem Leiter (LT) elektrisch verbunden wird, und/oder
- die elektrische Verbindung des Stromabnehmers (SA) mit dem Leiter (LT) bei einem Ausfahren des Schienenfahrzeugs (TZ) aus dem Bereich des Streckenabschnitts getrennt wird.

4. Verfahren nach einem der vorhergehenden Ansprüche, bei dem für das Beginnen des Ladevorgangs, sofern das Schienenfahrzeug (TZ) eine Mehrzahl Stromabnehmer (SA) aufweist, das Anlegen der Kleinspannung durch die streckenseitige Ladevorrichtung (SLV) erst beendet wird, wenn alle für den Ladevorgang verwendeten Stromabnehmer (SA) mit dem Leiter (LT) elektrisch verbunden sind.

5. Verfahren nach einem der Ansprüche 1 bis 3, bei dem für das Beginnen des Ladevorgangs, sofern das Schienenfahrzeug (TZ) eine Mehrzahl Stromabnehmer (SA) aufweist, die fahrzeugseitige Ladevorrichtung (FLV) die elektrische Last (L) auf zumindest einen der Stromabnehmer (SA) erst schaltet, wenn alle für den Ladevorgang verwendeten Stromabnehmer (SA) mit dem Leiter (LT) verbunden sind.

6. Verfahren nach einem der vorhergehenden Ansprüche, bei dem der streckenseitigen Ladevorrichtung (SLV) von der fahrzeugseitigen Ladevorrichtung (FLV) Informationen bezüglich einer Identifikation des Schienenfahrzeugs (TZ), einer Anzahl für den Ladevorgang verwendeter Stromabnehmer (SA) und/oder eine elektrische Verbindung des oder der Stromabnehmer (SA) mit dem Leiter (LT) signalisiert werden.

7. Verfahren nach Anspruch 6, bei dem
die Informationen leitungsbasiert über den Leiter (LT) signalisiert werden.

8. Ladevorrichtung (FLV) in einem Schienenfahrzeug (TZ), welche mit zumindest einem Energiespeicher (TB) zur Versorgung eines Antriebs des Schienenfahrzeugs (TZ) verbunden ist und über einen Stromabnehmer (SA) mit einem in einem begrenzten Bereich eines Streckenabschnitts eines Schienennetzes angeordneten elektrischen Leiter (LT) verbindbar ist,
**gekennzeichnet durch** eine Steuereinrichtung (ST) zum Steuern eines Beginnens eines Ladevorgangs zum Laden des Energiespeichers (TB), wobei die Steuereinrichtung (ST) ausgestaltet ist, ein Anliegen einer Kleinspannung an dem Leiter (LT) zu erkennen, nach Erkennen des Anliegens der Kleinspannung eine elektrische Last (L) auf den Stromabnehmer (SA) zu schalten, das Anliegen einer Ladespannung an dem Leiter (LT) zu erkennen und nach Erkennen der Ladespannung die elektrische Last (L) von dem Stromabnehmer (SA) zu trennen und einen mit dem Energiespeicher (TB) elektrisch verbundenen Laderegler (LR) mit dem Stromabnehmer (SA) elektrisch zu verbinden.

9. Ladevorrichtung nach Anspruch 8, wobei
die Steuereinrichtung (ST) ferner zum Steuern eines Beendens des Ladevorgangs ausgestaltet ist, den Fluss des Ladestroms mittels des Ladereglers (LR) unterhalb eines vorgegebenen Schwellwertes zu verringern oder die elektrische Verbindung des Ladereglers (LR) mit dem Stromabnehmer (SA) zu trennen.

10. Schienenfahrzeug (TZ), mit zumindest
- einem elektrischen Antrieb,
- einem Energiespeicher (TB) zur Versorgung des Antriebs mit elektrischer Energie, und
- einem Stromabnehmer (SA) zur Verbindung mit einem streckenseitig angeordneten elektrischen Leiter (LT), **gekennzeichnet durch**
- eine Ladevorrichtung (FLV) nach Anspruch 8 oder 9.

11. Ladevorrichtung (SLV) an einem Schienennetz, welche mit einem in einem begrenzten Bereich eines Streckenabschnitts des Schienennetzes angeordneten elektrischen Leiter (LT) verbunden ist und während eines Ladevorgangs eine Ladespannung und ansonsten eine Kleinspannung an den Leiter (LT) anlegt,
**gekennzeichnet durch** eine Steuereinrichtung (ST) zum Steuern eines Beginnens des Ladevorgangs zum Laden zumindest eines Energiespeichers (TB) eines Schienenfahrzeugs (TZ) über den Leiter (LT), wobei die Steuereinrichtung (ST) ausgestaltet ist, ein Fließen eines Laststroms in dem Leiter (LT) zu erkennen und nach Erkennen des Fließens des Laststroms das Anlegen der Kleinspannung zu beenden und die Ladespannung an den Leiter (LT) anzulegen.

12. Ladevorrichtung (SLV) nach Anspruch 11, wobei die Steuereinrichtung (ST) ferner zum Steuern eines Beendens des Ladevorgangs ausgestaltet ist, nach Erkennen, dass ein Ladestrom unterhalb eines vorgegebenen Schwellwertes oder kein Ladestrom mehr in dem Leiter (LT) fließt, wieder die Kleinspannung an den Leiter (LT) anzulegen.

13. Ladesystem, umfassend
- eine Ladevorrichtung (FLV) in einem Schienenfahrzeug (TZ) nach Anspruch 8 oder 9, und
- eine Ladevorrichtung (SLV) an einem Schienennetz nach Anspruch 11 oder 12.

## Claims

1. Method for controlling a procedure for charging at least one energy storage device (TB) of a rail vehicle (TZ), wherein the energy storage device (TB) serves to supply a drive of the rail vehicle with electrical energy and the charging of the energy storage device (TB) takes place by means of an electrical conductor (LT) arranged in a limited region of a track section of a rail network, **characterised in that** a charge voltage can be applied to the conductor (LT) by a trackside charging apparatus (SLV) and otherwise a low voltage is applied to the conductor (LT),
in which
for beginning the charging procedure
- at least one current collector (SA) connected to the vehicle-side charging apparatus (FLV) is connected to the electrical conductor (LT),
- after the vehicle-side charging apparatus (FLV) identifies that the low voltage is being applied to the conductor (LT), an electrical load (L) is connected to the current collector (SA),
- after the track-side charging apparatus (SLV) identifies that a load current is flowing in the conductor (LT), the application of the low voltage is terminated and the charge voltage is applied to the conductor (LT), and
- after the vehicle-side charging apparatus (FLV) identifies that the low voltage is no longer being applied to the conductor (LT), the electrical load (L) is disconnected from the current collector (SA), and
- once the vehicle-side charging apparatus (FLV) identifies that the charge voltage is being applied to the conductor (LT), a charge regulator (LR), which is electrically connected to the energy storage device (TB), of the vehicle-side charging apparatus (FLV) is electrically connected to the current collector (SA).

2. Method according to claim 1, in which
for terminating the charging procedure:
- the flow of the charge current is reduced below a predefined threshold value by means of the charge regulator (LR) or the electrical connection of the charge regulator (LR) to the current collector (SA) is disconnected, and
- after the track-side charging apparatus (SLV) identifies that a charge current below the threshold value is flowing or that charge current is no longer flowing in the conductor (LT), the low voltage is applied to the conductor (LT) again.

3. Method according to claim 1 or 2, in which
- when the rail vehicle (TZ) enters the region of the track section, the current collector (SA) is electrically connected to the conductor (LT), and/or
- the electrical connection of the current collector (SA) to the conductor (LT) is disconnected when the rail vehicle (TZ) leaves the region of the track section.

4. Method according to one of the preceding claims, in which for beginning the charging procedure, provided that the rail vehicle (TZ) has a plurality of current collectors (SA), the application of the low voltage by the track-side charging apparatus (SLV) is only terminated when all current collectors (SA) used for the charging procedure are electrically connected to the conductor (LT).

5. Method according to one of claims 1 to 3, in which for beginning the charging procedure, provided that the rail vehicle (TZ) has a plurality of current collectors (SA), the vehicle-side charging apparatus (FLV) only connects the electrical load (L) to at least one of the current collectors (SA) when all current collectors (SA) used for the charging procedure are connected to the conductor (LT).

6. Method according to one of the preceding claims, in which information regarding an identification of the rail vehicle (TZ), a number of current collectors (SA) used for the charging procedure and/or an electrical connection of the current collector(s) (SA) to the conductor (LT) are signalled from the vehicle-side charging apparatus (FLV) to the track-side charging apparatus (SLV).

7. Method according to claim 6, in which
the information is signalled via the conductor (LT) in a line-based manner.

8. Charging apparatus (FLV) in a rail vehicle (TZ),
which is connected to at least one energy storage device (TB) for supplying a drive of the rail vehicle (TZ) and can be connected to an electrical conductor (LT) arranged in a limited region of a track section of a rail network via a current collector (SA),
**characterised by** a control facility (ST) for controlling a beginning of a charging procedure for charging the energy storage device (TB), wherein the control facility (ST) is configured to identify an application of a low voltage to the conductor (LT), to connect an electrical load (L) to the current collector (SA) after identifying the application of the low voltage, to identify the application of a charge voltage to the conductor (LT) and to disconnect the electrical load (L) from the current collector (SA) after identifying the charge voltage, and to electrically connect a charge regulator (LR) electrically connected to the energy storage device (TB) to the current collector (SA).

9. Charging apparatus according to claim 8, wherein
the control facility (ST) is further configured to control a termination of the charging procedure, to reduce the flow of the charge current below a predefined threshold value by means of the charge regulator (LR) or to disconnect the electrical connection of the charge regulator (LR) to the current collector (SA).

10. Rail vehicle (TZ), with at least
- one electrical drive,
- one energy storage device (TB) for supplying the drive with electrical energy, and
- one current collector (SA) for connecting to an electrical conductor (LT) arranged on the track side,
**characterised by**
- a charging apparatus (FLV) according to claim 8 or 9.

11. Charging apparatus (SLV) on a rail network, which is connected to an electrical conductor (LT) arranged in a limited region of a track section of the rail network and during a charging procedure applies a charge voltage and otherwise applies a low voltage to the conductor (LT), **characterised by** a control facility (ST) for controlling a beginning of the charging procedure for charging at least one energy storage device (TB) of a rail vehicle (TZ) via the conductor (LT), wherein the control facility (ST) is configured to identify a flow of a load current in the conductor (LT) and, after identifying the flow of the charge current, to terminate the application of the low voltage and to apply the charge voltage to the conductor (LT).

12. Charging apparatus (SLV) according to claim 11, wherein the control facility (ST) is further configured, for controlling a termination of the charge procedure, to apply the low voltage to the conductor (LT) again after identifying that a charge current below a predefined threshold value is flowing or that charge current is no longer flowing in the conductor (LT).

13. Charging system, comprising
- a charging apparatus (FLV) in a rail vehicle (TZ) according to claim 8 or 9, and
- a charging apparatus (SLV) on a rail network according to claim 11 or 12.

## Revendications

1. Procédé de commande d'une opération de charge d'au moins un accumulateur (TB) d'énergie d'un véhicule (TZ) ferroviaire, l'accumulateur (TB) d'énergie servant à alimenter en énergie électrique un entraînement du véhicule ferroviaire et la charge de l'accumulateur (TB) d'énergie s'effectuant au moyen d'un conducteur (LT) électrique disposé dans une partie délimitée d'une section de voie d'un réseau ferroviaire, **caractérisé en ce que**, par une installation (SLV) de charge sur la voie, on peut appliquer une tension de charge au conducteur (LT) et sinon, on applique une tension basse au conducteur (LT),
dans lequel
pour faire débuter une opération de charge
- on relie au conducteur (LT) électrique au moins un appareil (SA) de prise de courant relié à l'installation (FLV) de charge embarquée sur le véhicule,
- après que l'installation (FLV) de charge embarquée sur le véhicule a reconnu que la tension basse s'applique au conducteur (LT), on branche une charge (L) électrique sur l'appareil (SA) de prise de courant,
- après que l'installation (SLV) de charge sur la voie a reconnu qu'un courant de charge passe dans le conducteur (LT), on met fin à l'application de la tension basse et on applique la tension de charge au conducteur (LT) et,
- après que l'installation (FLV) de charge embarquée sur le véhicule a reconnu que la tension basse ne s'applique plus au conducteur (LT), on sépare la charge électrique de l'appareil (SA) de prise de courant et,
- après que l'installation (FLV) de charge embarquée sur le véhicule a reconnu que la tension de charge s'applique au conducteur (LT), on connecte électriquement à l'appareil (SA) de prise de courant un régleur (LR) de charge, connecté électriquement à l'accumulateur (TB) d'énergie, de l'installation (FLV) de charge embarquée sur le véhicule.

2. Procédé suivant la revendication 1, dans lequel pour mettre fin à l'opération de charge :
- on diminue le flux du courant de charge au moyen du régleur (LR) de charge en dessous d'une valeur de seuil donnée à l'avance ou on coupe la liaison électrique du régleur (LR) de charge avec l'appareil (SA) de prise de courant et,
- après que l'installation (FLV) de charge sur la voie a reconnu qu'un courant de charge en dessous de la valeur de seuil passe dans le conducteur (LT) ou qu'il ne fasse plus de courant de charge dans le conducteur (LT), on applique à nouveau la tension basse au conducteur (LT).

3. Procédé suivant l'une des revendications 1 ou 2, dans lequel
- on relie électriquement l'appareil (SA) de prise de courant au conducteur (LT), lorsque le véhicule (TZ) ferroviaire entre dans la partie de la section de voie et/ou
- on coupe la liaison électrique de l'appareil (SA) de prise de courant avec le conducteur (LT), lorsque le véhicule (TZ) ferroviaire sort de la partie de la section de voie.

4. Procédé suivant l'une des revendications précédentes, dans lequel pour faire débuter l'opération de charge dans la mesure où le véhicule (TZ) ferroviaire a une pluralité d'appareils (SA) de prise de courant, on met fin d'abord à l'application de la tension basse par l'installation (SLV) de charge sur la voie si tous les appareils (SA) de prise de courant utilisés pour l'opération de charge sont reliés électriquement au conducteur (LT).

5. Procédé suivant l'une des revendications 1 à 3, dans lequel pour faire débuter l'opération de charge dans la mesure où le véhicule (TZ) ferroviaire a une pluralité d'appareils (SA) de prise de courant, l'installation (FLV) de charge embarquée sur le véhicule ne branche la charge (L) électrique sur au moins l'un des appareils (SA) de prise de courant que si tous les appareils (SA) de prise de courant utilisés pour l'opération de charge sont reliés au conducteur (LT).

6. Procédé suivant l'une des revendications précédentes, dans lequel on donne à l'installation (SLV) de charge sur la voie, par l'installation (FLV) de charge embarquée sur le véhicule, des informations se rapportant à une identification du véhicule (TZ) ferroviaire, à un nombre d'appareils (SA) de prise de courant utilisés pour l'opération de charge ou à une liaison électrique du ou des appareils (SA) de prise de courant au conducteur (LT).

7. Procédé suivant la revendication 6, dans lequel on donne les informations reposant sur une ligne par l'intermédiaire du conducteur (LT).

8. Installation (FLV) de charge dans un véhicule (TZ) ferroviaire, qui est connectée à au moins un accumulateur (TB) d'énergie pour l'alimentation d'un entraînement du véhicule (TZ) ferroviaire et qui peut, par un appareil (SA) de prise de courant, être reliée à un conducteur (LT) électrique disposé dans une partie limitée d'une section de voie d'un réseau ferroviaire,
**caractérisée par** un dispositif (ST) de commande pour commander un début d'une opération de charge pour la charge de l'accumulateur (TB) d'énergie, le dispositif (ST) de commande étant conformé pour reconnaître une application d'une tension basse au conducteur (LT), après avoir reconnu l'application de la tension basse, brancher une charge (LT) électrique sur l'appareil (SA) de prise de courant, reconnaître l'application d'une tension de charge au conducteur (LT) et, après avoir reconnu la tension de charge, séparer la charge (L) électrique de l'appareil (SA) de prise de courant et connecter électriquement à l'appareil (SA) de prise de courant un régleur (LR) de charge connecté électriquement à l'accumulateur (TB) d'énergie.

9. Installation de charge suivant la revendication 8, dans laquelle le dispositif (ST) de commande est conformé en outre pour commander de mettre fin à l'opération de charge, diminuer le flux du courant de charge au moyen du régleur (LR) de charge en dessous d'une valeur de seuil donnée à l'avance ou couper la liaison électrique du régleur (LR) de charge à l'appareil (SA) de prise de courant.

10. Véhicule (TZ) ferroviaire comprenant au moins
- un entraînement électrique,
- un accumulateur (TB) d'énergie pour alimenter l'entraînement d'énergie électrique, et
- un appareil (SA) de prise de courant pour la connexion avec un conducteur (LT) électrique disposé sur la voie,
**caractérisé par**
- une installation (FLV) de charge suivant la revendication 8 ou 9.

11. Installation (FLV) de charge sur un réseau ferroviaire, qui est reliée à un conducteur (LT) électrique disposé dans une partie limitée d'une section de voie du réseau ferroviaire et qui, pendant une opération de charge, applique au conducteur (LT) pendant une opération de charge, une tension de charge et sinon une tension basse,
**caractérisée par** un dispositif (ST) de commande pour commander un début de l'opération de charge pour la charge d'au moins un accumulateur (TB) d'énergie d'un véhicule (TZ) ferroviaire par l'intermédiaire du conducteur (LT), le dispositif (ST) de commande étant conformé pour reconnaître qu'un courant de charge passe dans le conducteur (LT) et pour, après avoir reconnu qu'un courant de charge passe, mettre fin à l'application de la tension basse et appliquer la tension de charge au conducteur (LT).

12. Installation (FLV) de charge suivant la revendication 11, dans laquelle le dispositif (ST) de commande est conformé en outre pour commander de mettre fin à l'opération de charge, après avoir reconnu qu'il passe dans le conducteur (LT) un courant de charge en dessous d'une valeur de seuil donnée à l'avance ou qu'il ne passe plus de courant de charge, appliquer à nouveau la tension basse au conducteur (LT).

13. Système de charge comprenant
- une installation (FLV) de charge dans un véhicule (TZ) ferroviaire suivant la revendication 8 ou 9, et
- une installation (FLV) de charge sur un réseau ferroviaire suivant la revendication 11 ou 12.
